# EUROPEAN PATENT SPECIFICATION

(11) **EP 0 392 638 B1**
(45) Date of publication and mention of the grant of the patent: **20.07.1994**
(21) Application number: 90200907.5
(22) Date of filing: 11.04.1990
(51) Int. Cl.: G01G 23/00

(54) **Weighing device and filling device for filling containers, provided with such a weighing device**
Wiegeeinrichtung und Abfülleinrichtung zum Füllen von Behältern mit einer solchen Wiegeeinrichtung
Dispositif de pesage et dispositif pour remplir des réservoirs munis d'un tel dispositif de pesage

(30) Priority: 12.04.1989 NL 8900913
(43) Date of publication of application: 17.10.1990
(73) Proprietor: STORK BEPAK B.V., 3531 VE Utrecht (NL)
(72) Inventor: van de Rotten, Lambertus Gerardus Maria, NL-3648 HM Wilnis (NL)
(74) Representative: Iemenschot, Johannes Andreas, Ir.

(56) References cited:
- GB-A- 2 110 392
- MEASUREMENT AND CONTROL, vol. 12, no. 11, November 1979, page 471, Sensor Developments; A. BRENDEL: "Overload protection in electronic weighing systems: part 5"
- MEASUREMENT AND CONTROL, vol. 12, no. 7, July 1979, pages 272-273, Sensor Developments; A. BRENDEL: "Overload protection in electronic weighing systems: Part 2"

## Description

The invention relates to a weighing device supported by a frame, comprising a movable platform on which an object to be weighed can stand, a weighing element which is coupled at one side to the platform and at the other side is supported by the frame, and limiting means for limiting forces exerted via the platform on the weighing element.

Such a weighing device is known from GB-A-2 110 392.

The invention also relates to a filling device for filling containers, such as bottles, jars and the like, provided with such a weighing device.

In the filling of containers such as bottles, jars and the like each container is placed under a filling spout. A valve is then opened, so that the product with which the container is to be filled (liquid, powder and the like) flows into the container. If the contents of the container has to be of a specific weight, the container is continuously weighed with increasing contents. Once a specific weight is reached, also called the stop point, the valve is closed. The weight at the stop point is not necessarily the same as the filled weight because, inter alia, after the closing of the valve a certain quantity of product can still flow out of the filling spout.

If high standards are set for the accuracy of the filled weight, special measures have to be taken to make the weighing device work reproducibly.

Systems are known in which containers are filled in a filling device and the filled containers are weighed in a weighing station disposed downstream of the filling device. Such a weighing station can be designed in such a way that high standards can be set for the weighing function.

Systems are also known in which the weighing function is accommodated in the filling device itself. The problem which occurs here is that the weighing device has to be not only accurate, but also sturdy. If, for example, for certain reasons a container is not placed correctly on the weighing platform of the weighing device, and during the remaining conveyance through the filling device the container becomes jammed between the weighing platform and stationary parts of the filling device, the weighing device must be so sturdy that it is not damaged as a result.

The weighing device disclosed in GB-A-2 110 392 has limiting means for limiting forces exerted via the platform on the weighing element which consist of stops which are capable of limiting only downward movements of the platform and thus only downwardly directed forces on the weighing element. The weighing elment is however not protected against overload or damage as a result of other movements of the platform.

The object of the present invention is to provide a weighing device which can be accomodated in a filling device for filling containers, which is protected against overload in all directions, and which has at the same time great absolute weighing accuracy.

This object is achieved by a weighing device of the type mentioned at the beginning, which is characterized in that the platform rests on the weighing element via a coupling comprising two interacting coupling elements, a first coupling element being connected to the the platform and the second coupling element being connected to the weighing element, the two coupling elements being arranged such that the weight of an object on the platform presses the coupling elements together, the two coupling elements being pressed together by means of a resilient element, and being rotatable relative to each other about an axis of rotation which is perpendicular to the platform, when a rotational force exerted on the platform exceeds a predetermined value.

When exceptional forces and/or moments are exerted on the platform, coupling prevents said forces and/or moments from being transmitted to the weighing element, which could be damaged by them. These exeptional forces and/or moments are then absorbed by the limiting means.

Preferred embodiments of the weighing device according to the invention are defined in the subclaims.

The invention will now be explained in greater detail in the description below of a preferred embodiment of the weighing device according to the invention with reference to the drawing, in which:
Fig. 1 shows schematically a weighing device according to the invention;
Fig. 2 shows schematically another embodiment of a weighing device according to the invention;
Fig. 3 shows a longitudinal section of a practical embodiment of a weighing device according to the invention;
Fig. 4 shows a view of the device of Fig. 3, viewed in the direction of the arrow IV;
Fig. 5 shows very schematically a rotary filling device with carrousel; and
Fig. 6 shows very schematically a linear filling device.

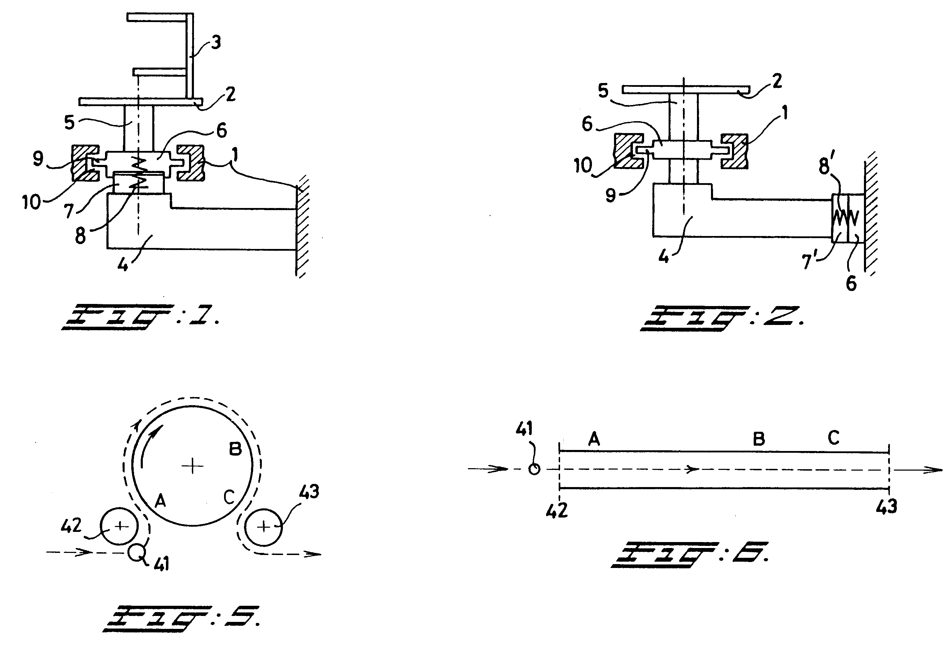

The weighing device shown in principle in Fig. 1 comprises a frame which is shown very schematically and is indicated by the reference number 1. By means of this frame 1 the weighing device is connected, for example, to a filling device (not shown). The weighing device also comprises a movable platform 2 on which a container which is retained by a retaining element 3 can stand. The platform is coupled to a weighing element 4 for weighing a filled or unfilled container standing on the platform 2.

The platform 2 rests on a column 5 and is fixed thereto. The column 5 is provided with a radial flange 6 near its bottom end. A flange 7 is fitted on the weighing element 4. The radial flange 6 and the flange 7 lie coaxially relative to each other and are coupled to each other by means of a resilient element 8. The radial flange 6 has a peripheral edge part 9 which is accommodated with play in an annular groove 10 in the frame 1.

The coupling between the flange 6 and the flange 7 can be designed in such a way that the platform 2 is rotatable relative to the weighing element 4 when a specific rotation force is exerted on the platform.

The resilient element 8 can be in various forms and be made of different materials. For example, the resilient element 8 can be in the form of a spring, but it can also be an element made of rubber or of any other resilient material. What is important is that the resilient element ensures that the former (rest) position is restored after the forces exerted thereon are removed.

In the event of exceptional forces and/or moments being exerted on the platform, for example through a container on it becoming jammed between the platform and stationary parts of the filling device, the fact that the flange 6 and the flange 7 are coupled together by means of the resilient element 8 will mean that the platform 2 and the weighing device 4 can move relative to each other, in which case the maximum forces and/or moments on the weighing device 4 are determined by the resilient element 8.

In addition, the deflections of the platform 2 will be limited, due to the fact that the deflections of the peripheral edge part 9 are limited by the annular groove 10. The peripheral edge part 9 will in this case come to rest against the wall of the groove 10.

Exceptional forces and/or moments exerted on the platform 2 are thus transmitted only to a limited degree to the weighing element 4. The weighing element 4 is thereby protected against overloading and damage.

It is pointed out that the limiting means are designed in such a way that they go into operation only when the forces on the platform 2 exceed a certain threshold. When the forces are below this threshold, the platform 2 is arranged so that it lies clear of the frame 1.

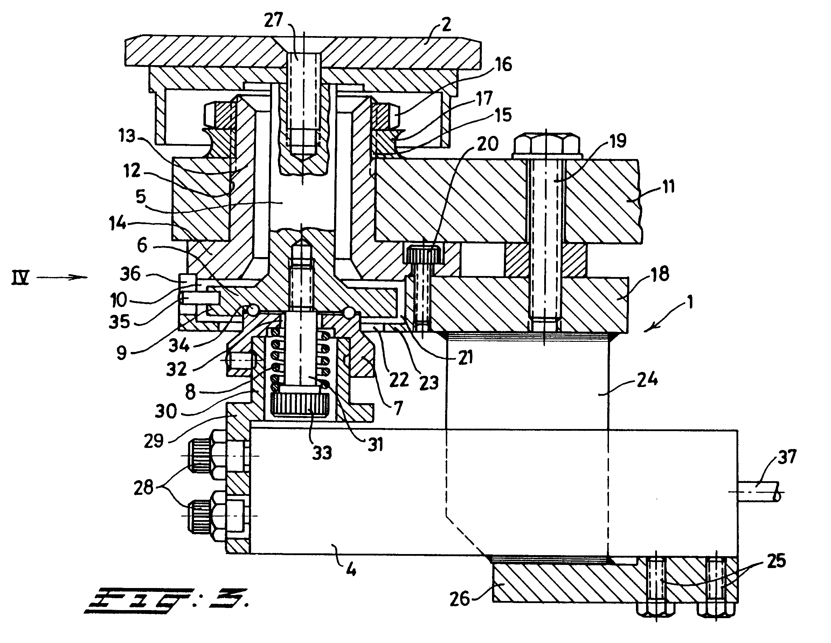

Fig. 2 shows a possible other embodiment of the weighing device according to the invention, in which a flange 6′ connected to the frame 1 and a flange 7′ connected to the weighing element are disposed between the weighing element 4 and the frame 1, and are coupled to each other by means of a resilient element 8′.

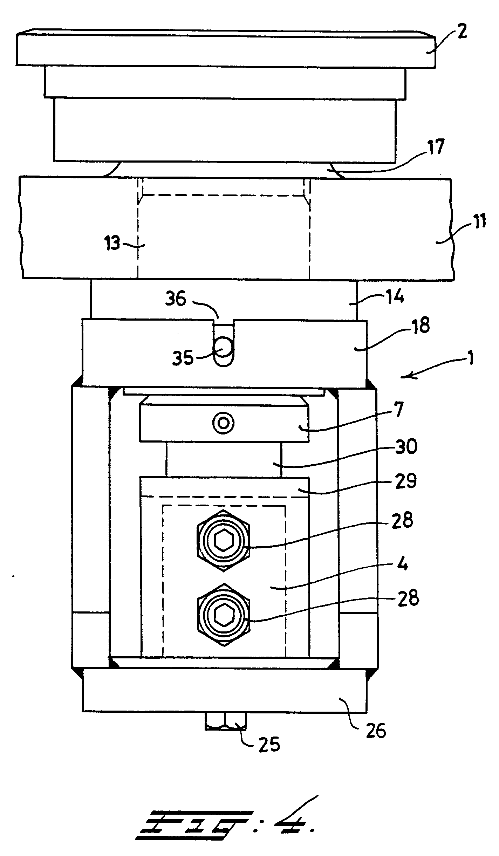

Figs. 3 and 4 show a practical embodiment of the weighing device according to the invention. In these figures the parts shown only schematically in Fig. 1 are indicated by the same reference numbers. The device shown in Figs. 3 and 4 comprises a frame 1, a platform 2, a weighing element 4, a column 5, a radial flange 6 with peripheral edge part 9, a flange 7, and a resilient element 8.

The frame 1 is made up of different parts which are connected to each other with bolts or by welding. The frame 1 is connected to the filling device by means of a plate 11. The plate 11 is provided with a bore 12 through which a bush 13 projects. The bush 13 is provided at the bottom side with a flange 14, and is provided at the top side with screw thread 15 on which is screwed a nut 16 through which the bush is fixed in the bore 12 of the plate 11. A spacer ring 17 is also provided between the nut 16 and the plate 11.

A second plate 18 of the frame 1 is connected by means of bolts 19 and 20 to the first plate 11. The second plate 18 is provided with a round recess 21 and an aperture 22 connecting to said recess 21 and having a smaller diameter than the recess 21, so that a peripheral edge 23 extending radially inwards is formed. The recess 21 and the aperture 22 lie coaxially relative to the bush 13 with flange 14. The flange 14, the peripheral edge of the recess 21 and the peripheral edge 23 extending inwards together form the annular groove 10.

Welded onto the second plate 18 is a U-shaped bracket 24 which carries the weighing element 4. The weighing element 4 is fixed by means of bolts 25 on the horizontal leg 26 of the U-shaped bracket 24.

The platform 2 is fixed by means of a screw 27 on the column 5. The column 5 is provided on the bottom side with the radial flange 6, the peripheral edge part 9 of which lies with play in the annular groove 10.

A connecting piece 29 with a vertical hollow cylindrical part 30 is fixed on the weighing element 4 by means of bolts 28. The flange 7 which is coaxial relative to the column 5 is fixed on the cylindrical part 30. Inside the cylindrical part 30 extends a bolt 31 which projects through a bore 32 in the flange part 7 and is screwed into the column 5 at the bottom side. The resilient element 8, which is in the form of a compression spring and ensures that the flange 7 and the radial flange 6 are pressed towards each other, is fitted between the head 33 of the bolt 31 and the flange 7.

A number of balls 34 arranged in a circle which fall into shallow recesses in both the flange 6 and the flange 7 are provided between the flange 7 and the radial flange 6. The flange part 6, the column 5 and the platform 2 are thereby rotatable to some extent relative to the flange 7. A rotation of the flange 6 and thus of the platform 2 is limited by a radially extending pin 35 which is fitted on the side in the flange 6, and which falls with play into a vertical slit 36 in the second plate 18 of the frame 1.

The weighing element 4 in this example is an electric weighing element and is provided with connecting wires 37 for transmitting a signal which is generated by the weighing element and is a measure of the weight of a container placed on the platform 2.

The use of the device according to the invention will be explained below, with reference also being made to Fig. 5 and Fig. 6, in which a rotary filling device, i.e. a filling device with carrousel, and a linear filling device respectively are shown very schematically.

A container 41 is guided into the filling device at the inlet 42 and is placed on a platform 2 (not shown) of a weighing device. The weight of the empty container is determined at A. Then the container is filled and weighed continuously until the stop point weight is reached at B. The valve in the feed line to the container is then closed. Finally, the filled container is re-weighed at C and conveyed out of the filling device through the outlet 43.

The weighing serves in the first place to control the valve in the feed line to the container, and also serves to determine the filled weight of the container. In addition, the final filled weight determined during a checking movement, if it differs from the desired filled weight, can be used to adjust the stop point weight continuously.

When a filling device is designed with a weighing device according to the invention, the weighing element 4 cannot be damaged if the platform 2 is subjected to exceptional forces and/or moments, for example if a container becomes jammed between the platform 2 and stationary parts of the filling device during its conveyance through the filling device. The platform 2 is limited in its movements both in the lateral direction and in the rotation direction through the fact that deflections in the lateral direction of the radial flange 6 fixed to the platform 2 are limited by the annular groove 10, and in the rotation direction through the vertical slit(s) 36 into which the pin(s) 35 fall. In addition, the coupling between the platform 2 and the weighing element 4 is not rigid, due to the fact that the flange 7 connected to the weighing element 4 is coupled by spring force to the radial flange 6 connected to the platform 2.

The dimensions of the annular groove 10 and the thickness of the peripheral edge part 9 of the flange 6 are selected in such a way that the maximal permissible deflection of the weighing element is not exceeded (approx. 0.4 mm in the case of a load of 10 kg).

The weighing device according to the invention is sturdy through its design, but it is also very accurate, since the platform 2 is coupled directly to the weighing element 4, and not to the other parts of the device, which could introduce inaccuracies into the weighing (for example, through friction).

The weighing device can be used not only in rotary, but also in linear and single-head filling devices.

## Claims

1. Weighing device supported by a frame (1), comprising a movable platform (2) on which an object to be weighed can stand, a weighing element (4) which at one side is coupled to the platform and at the other side is supported by the frame, and limiting means for limiting the forces exerted via the platform on the weighing element, characterized in that the platform (2) rests on the weighing element (4) via a coupling comprising two interacting coupling elements (6, 7), a first coupling element being connected to the the platform and the second coupling element (7) being connected to the weighing element, the two coupling elements being arranged such that the weight of an object on the platform presses the coupling elements together, the two coupling elements being pressed together by means of a resilient element (8), and being rotatable relative to each other about an axis of rotation which is perpendicular to the platform, when a rotational force exerted on the platform exceeds a predetermined value.

2. Weighing device according to claim 1, characterized in that the coupling elements comprise two coaxially arranged flanges (6, 7) extending substantially radially to the axis of rotation, a peripheral part (9) of the flange (6) connected to the platform (2) being accomodated with play in an annular groove (10) in the frame (1).

3. Weighing device according to claim 2, characterized in that the flange (6) connected to the platform is provided at the outer periphery with at least one radially extending pin (35) which projects with play into a recess (36) in the frame (1).

4. Weighing device according to claim 2 or 3, characterized in that a number of balls (34) arranged in a circle are provided between the flanges (6, 7), the balls falling into shallow recesses in the two flanges (6, 7).

5. Weighing device according to any of claims 1-4, characterized in that the resilient element (8) is a spring.

6. Filling device for filling containers, such as bottles, jars and the like, provided with at least one weighing device according to anyone of claims 1-5.

## Patentansprüche

1. Wiegeeinrichtung, die von einem Rahmen (1) gehaltert ist, mit einer bewegbaren Plattform (2), auf der ein zu wiegendes Gut stehen kann, einem Wiegeelement (4), welches an einer Seite mit der Plattform verbunden ist und an der anderen Seite von dem Rahmen gehalten wird, und mit einer Begrenzungseinrichtung zur Begrenzung der über die Plattform auf das Wiegeelement einwirkenden Kräfte,
**dadurch gekennzeichnet**, daß die Plattfrom (2) auf dem Wiegeelement (4) über eine aus zwei miteinader in Wechselbeziehung stehende Kupplungselemente (6, 7) bestehende Kupplung aufliegt, wobei ein erstes Kupplungselement mit der Plattform und ein zweites Kupplungselement (7) mit dem Wiegeelement verbunden ist und die zwei Kupplungselemente derart angeordnet sind, daß das Gewicht eines auf der Plattform befindlichen Guts die Kupplungselemente zusammendrückt, und daß die Kupplungselemente mittels eines elastischen Elements (8) zusammengedrückt werden und um eine senkrecht zur Plattform ausgerichteten Rotationsachse relativ zueinander verdrehbar sind, wenn eine auf die Plattform wirkende Rotationskraft einen vorbestimmten Wert übersteigt.

2. Wiegeeinrichtung nach Anspruch 1,
**dadurch gekennzeichnet**, daß die Kupplungselemente zwei koaxial angeordnete, sich im wesentlichen radial zur Rotationsachse erstreckende Flansche (6, 7) umfassen und ein peripherer Teil (9) des mit der Plattform (2) verbundenen Flansches (6) mit Spiel in einer Ringnut (10) im Rahmen (1) aufgenommen ist.

3. Wiegeeinrichtung nach Anspruch 2,
**dadurch gekennzeichnet**, daß der mit der Plattform verbundene Flansch (6) an seinem Außenrand mit mindestens einem, sich radial erstreckenden Stift (35) versehen ist, der mit Spiel in eine Aussparung (36) in den Rahmen (1) hineinragt.

4. Wiegeeinrichtung nach Anspruch 2 oder 3,
**dadurch gekennzeichnet**, daß eine Anzahl in einem Kreis angeordneter Kugeln (34) zwischen den Flanschen (6, 7) vorhanden ist und die Kugeln in flache Aussparungen in den zwei Flanschen (6, 7) fallen.

5. Wiegeelement nach einem der Ansprüche 1 bis 4,
**dadurch gekennzeichnet**, daß das elastische Element (8) eine Feder ist.

6. Abfülleinrichtung zur Befüllung von Behältern wie Flaschen, Krüge und dergleichen, die mit mindestens einer Wiegeeinrichtung gemäß irgendeinem der Patentansprüche 1 bis 5 versehen ist.

## Revendications

1. Dispositif de pesage porté par un bâti (1) et comprenant une plateforme mobile (2) sur laquelle peut être posé un objet à peser, un élément de pesage (4) qui est couplé d'un côté à la plateforme et porté, de l'autre, par le bâti, ainsi que des moyens de limitation des forces exercées par la plateforme sur l'élément de pesage,
caractérisé par le fait que la plateforme (2) repose sur l'élément de pesage au moyen d'un accouplement comprenant deux éléments d'accouplement interactifs (6, 7), le premier élément d'accouplement étant relié à la plateforme et le deuxième, (7), à l'élément de pesage, les deux éléments d'accouplement étant agencés de manière à ce que le poids d'un objet posé sur la plateforme pousse les éléments d'accouplement l'un contre l'autre, les deux éléments d'accouplement étant poussés l'un contre l'autre au moyen d'un élément flexible (8) et pouvant pivoter l'un par rapport à l'autre autour d'un axe de rotation perpendiculaire à la plateforme lorsqu'une force de rotation exercée sur la plateforme dépasse une valeur prédéterminée.

2. Dispositif de pesage selon la revendication 1,
caractérisé par le fait que les éléments d'accouplement comprennent deux brides (6, 7) agencées coaxialement et s'étendant sensiblement dans la direction radiale par rapport à l'axe de rotation, une portion périphérique (9) de la bride (6) reliée à la plateforme (2) étant logée avec jeu dans une rainure annulaire (10) du bâti (1).

3. Dispositif de pesage selon la revendication 2,
caractérisé par le fait que la bride (6) reliée à la plateforme comporte, à sa périphérie extérieure, au moins une cheville (35) qui s'étend dans la direction radiale et penètre avec jeu dans un évidement (36) du bâti.

4. Dispositif de pesage selon la revendication 2 ou 3,
caractérisé par le fait qu'un certain nombre de billes (34), disposées en cercle, est prévu entre les brides (6, 7), ces billes tombant dans des évidements peu profonds prévus dans les deux brides (6, 7).

5. Dispositif de pesage selon l'une quelconque des revendications 1 à 4,
caractérisé par le fait que l'élément flexible (8) est un ressort.

6. Dispositif de remplissage de récipients, tels que bouteilles, bocaux et analogues comportant au moins un dispositif de pesage selon l'une quelconque des revendications 1 à 5.
